# EUROPEAN PATENT APPLICATION

(11) **EP 2 255 997 A1**
(43) Date of publication of application: **01.12.2010**
(21) Application number: 10275057.7
(22) Date of filing: 28.05.2010
(51) Int. Cl.: B60P 7/08

(54) **A fastening arrangement for securing a load to a support surface**

(30) Priority: 28.05.2009 GB 0909124
(71) Applicant: Lawrence David Limited, Cambridgeshire PE2 7BW (GB)
(72) Inventor: Timpson, Brian, Stamford, Lincolnshire PE9 3 PF (GB)
(74) Representative: Lamb, Richard Andrew

(57) **Abstract**

A fastening arrangement (20) for securing a load (15) to the deck (2) of a trailer (10) in transit. The fastening arrangement (20) comprises a securing member (22) for clamping the load (15) to the support surface (2), and at least one securing member support (24) mountable in an elevated position from the deck (2) for supporting the securing member (22). The securing member support (24) comprises a movable portion connected to the securing member (22) which is movable between a first support position in which at least a portion of the securing member (22) is held spaced from the deck (2), and a second deployed position in which the securing member (22) is able to engage and secure the load (15) to the deck (2).

## Description

The present invention relates to a fastening arrangement for securing a load to the support surface of a vehicle, and in particular for securing a load to the base of a trailer.

In the road haulage industry, cargo loads are carried on flatbed trailers connected to an engine driven truck. Loads are often secured in transit, to prevent movement of the loads within the trailer, and thereby mitigate damage to both the goods and the trailer. Load securement is particularly important for trailers having open side walls closed off with curtains. Although such curtains typically include reinforcement members, large unsecured loads may still irreparably damage, or even fall through the curtains under certain driving conditions, potentially risking serious injury or death to other road users and pedestrians.

Strap fasteners are used to secure loads to the base of a trailer. Typically one or more straps are passed over the load, and secured at either side to the trailer base, before being tensioned to securely hold the load in position. This operation is cumbersome, and can be significantly time consuming, particularly where several loads must be secured within a trailer. In addition, fitting such straps often requires the operator to climb onto the trailer floor, which presents health and safety risks to the operator.

It is therefore desirable to provide an improved fastening arrangement for securing a load to a support surface of a trailer which addresses the above described problems and/or which offers improvements generally.

According to the present invention there is provided a fastening arrangement as described in the accompanying claims. There is also provided a load transporter as described in the accompanying claims.

In an embodiment of the invention there is provided a fastening arrangement for securing a load to a load support surface. The fastening arrangement comprises a securing member for clamping said load to the support surface, and at least one securing member support mountable spaced from said support surface for supporting the securing member. The at least one securing member support comprises a movable portion connected to the securing member which is movable between a first support position in which at least a portion of the securing member is held spaced from the support surface, and a second deployed position in which the securing member is able to engage and secure said load to said support surface.

Holding the securing member in a support position spaced away from the support surface enables the securing member to be easily moved over loads placed on the support surface, and obviates the requirement for an operator having to struggle to pass the securing member over the load once in place. Specifically, the securing member can be stowed high in the roof section of a trailer to enable it to be moved over goods placed on the trailer. The movable portion of the securing member support enables the securing member to a moved to deployed position once located over the load, to clamp the load to the base. In addition, the movable securing member support enables the securing member to also be retracted away from the load when released to allow the load to be removed from the base unobstructed, and returns the securing member to a stowed retracted position.

This arrangement provides the further advantage that the load may be secured by a single operative. Conventionally, two operatives have been required at opposing sides of a trailer to pass and receive a securing strap, and to secure the strap. As the fastening arrangement of the present invention includes a strap which is mounted spaced from the load surface a single operative may quickly and easily move the load strap over a load and secure it while it remain supported in the stowed position. In addition, as the load strap I moved into position from above the load surface, the operative does not have to climb onto the load deck of the trailer to pass the strap over the load, thereby making securement of the load a safer operation.

The fastening arrangement may further comprise a biasing member that biases the movable portion and the securing member to the first support position. In this way, when the securing member is released from the deployed securing position it is automatically retracted to the first support position by the biasing member.

The securing member support may comprise an elongate resilient member. The elongate resilient member may be an elastic cord such as a bungee cord, and comprises the biasing member. The resilient member may comprise a first end for connection to the securing member, a second end for connection to a mounting point spaced from the support surface, and a main body portion. Stretching of the body portion enables the first end section to move to the deployed position.

The load surface may be a load support surface of a vehicle. Specifically, the load surface may be a load surface of one of a flatbed trailer, an articulated truck, a curtain sided trailer, a train carriage or any other load space for transit of a load, including a shipping container.

The fastening arrangement may comprise two securing member supports. The two securing members are laterally spaced to support the securing member in the first support position at two laterally spaced apart locations. In this way the securing member may be spaced apart across the width of support surface to enable it to be easily moved over a load. The securing member supports may be spaced substantially the width of the support surface, which enables the securing member to pass the sides of any load accommodated on the support surface.

The securing member has two opposing ends which are connectable to corresponding fixed and laterally spaced anchoring points proximate the load support surface such that a load receiving area is defined between the load supporting surface and the securing member. The load receiving area defined by the securing member ensures the securing member is spaced such that a load may be received beneath the load securing member, with the securing member able to pass over the load and/or the load able to pass under the securing member unobstructed.

A plurality of anchoring points may be provided which are spaced longitudinally along opposing edges of the support surface. The plurality of anchoring points defined a plurality of securing positions along the length of the support surface. As such, the securing member may be secured to the load surface to clamp a load at any one of the securing positions. The securing member comprises a strap such as a load strap. Alternatively, the securing member may be a sheet or a rigid elongate member. The use of a load strap provides a lightweight, flexible securing member having a high tensile strength which is easily conformable to the shape of the load against which it is clamped.

The fastening arrangement may further comprising tensioning means for tightening the securing member to tension the securing member against the load support surface to clamp the load against the load support surface. The tensioning means is a ratchet tensioner configured to decrease the effective length of the securing member to tightening and hence clamp the securing member against the load. As the tensioner tightens the securing member it is moved from the first support position to the deployed position.

The securing member may be slidingly supported by the at least one securing member support. Preferably the at least one securing member support comprises a sleeve for slidingly receiving the securing member. The slidable sleeve support enables the securing member to slide relative to the securing member support. This allows the securing member to be shortened for tensioning without pulling the securing member supports out of their support positions.

The fastening arrangement may comprise guide means mountable in a spaced relationship to the support surface. The at least one securing member support is movably mounted on the guide means to enable selective positioning of the support member along the guide means. The guide means may be tracks mounted on opposing sides of the support surface and arranged along the length of the support surface, with the securing member support slideable along the tracks. In this way the securing member support may be selectively positioned at a plurality of securing positions along the support surface.

In another aspect of the invention there is provided a load transporter comprising a base defining a load support surface for supporting a load, and at least one fastening arrangement as described above and in the accompanying claims. The at least one securing member support is mounted in an elevated position relative to the base. Preferably, the load transporter comprises a frame mounted to the base, and the at least one securing member is mounted to the frame in an elevated position relative to the base.

The at least one securing member support is moveably mounted in the elevated position to enable the securing member to be selectively moved to a plurality of securing positions.

The load transporter may comprise a cross beam mounted in an elevated position from and extending across the base, and upon which the securing member support is mounted. The cross beam is movably mounted on the guide tracks such that it is movable along the length of the base to carry the securing member supports and thereby the securing member along the base.

The load transporter may be a vehicle trailer. The load transporter may alternatively be a an articulated truck, a curtain sided trailer, a train carriage or any other load space for transit of a load, including a shipping container.

The present invention will now be described by way of example only with reference to the following illustrative figures in which:
Figure 1 shows a curtain sided trailer according to an embodiment of the invention;
Figure 2 shows a cut away section of a trailer including a fastening arrangement according to an embodiment of the invention;
Figure 3 shows a cut away section of a trailer including a fastening arrangement according to an embodiment of the invention;

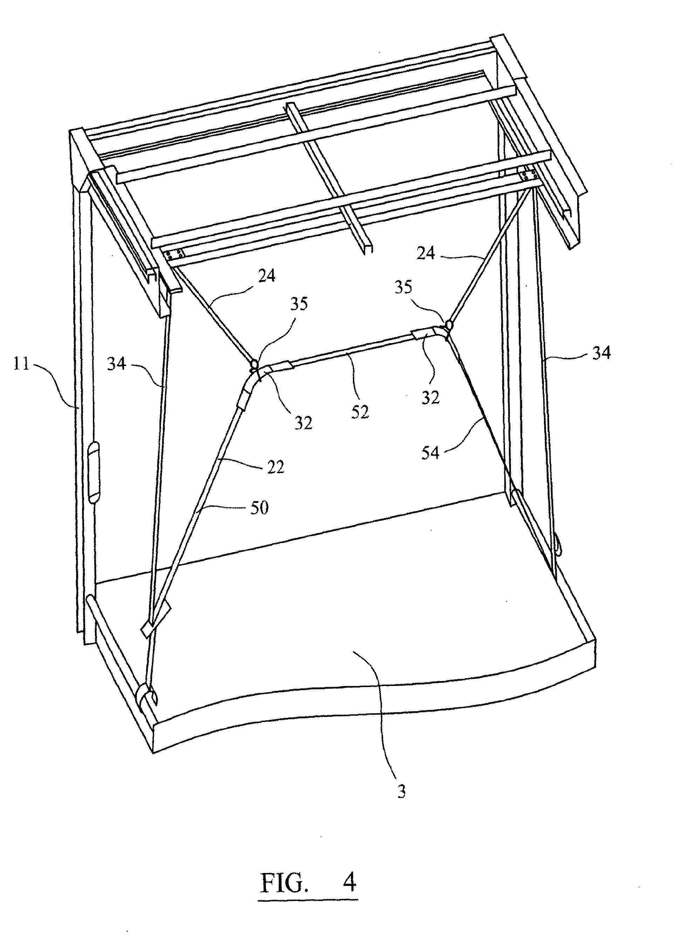

Figure 4 shows the fastening arrangement of Figure 2 in the deployed securing position;
Figure 5 is a diametric representation of a fastening arrangement according to the claimed invention, in the deployed securing position, with the retracted position represented in phantom lines.

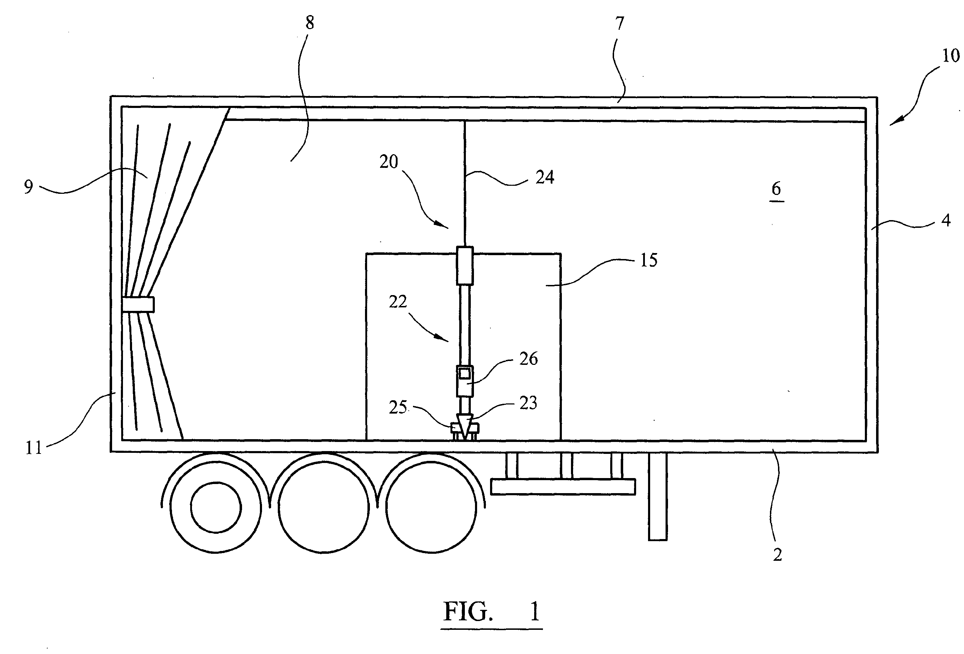

Referring to Figure 1, a trailer 10 for connection to an engine driven truck is used in the haulage industry for transportation of cargo loads. The trailer 10 comprises a deck 2 forming a base of the trailer 10 which defines a support surface for supporting a load 15 to be transported by the trailer 10. A frame 11 is mounted to the base 2 and supports a plurality of walls 4 and a roof 7. The side walls 4 and roof 7 define a load space 6 for containing the load 15.

Side walls 8 extend along the length of the base. The side walls 8 are formed from flexible curtains 9. The curtains 9 comprise flexible material re-enforced with vertically extending re-enforcement rods. Each curtain 9 is retractable between an open position and closed position. In the open position, as shown in Figure 1, the curtain 9 is retracted to an end of the base 2 to provide access to the load space 6 through the side wall 8 for loading and unloading cargo loads. In the closed position the curtain 9 extends along the entire length of the base to close the side wall 8.

In transit, the load 15 is supported on the base 2. Due to the inertia resulting from the mass of the load 15, the load 15 is prone to lateral movement relative to the base 2 in transit. Specifically, acceleration and deceleration of the trailer 10 causes longitudinal movement of the load 15 backwards and forwards along the length of the trailer 10. Changes in direction, such as cornering, cause transverse movement of the load 15 side to side across the base 2 of the trailer 10. Transverse movement is of particular concern is it can result in the load 15 impacting against the curtain 9. This contact can cause damage to the curtain 9 or the load 15. More seriously, depending on the weight of the load and the transverse acceleration caused by the trailer 10, impact of the load 15 with the side even result in the load 15 breaking through the curtain 9 and falling from the trailer 10.

A fastening arrangement 20 is therefore provided to secure the load 15 to the base 2 to prevent movement of the load 15 relative to the base 2 in transit. While an individual fastening arrangement is described below, multiple fastening arrangements 20 may be mounted to the trailer 10 for securing multiple loads, or for applying additional securement to a single large load.

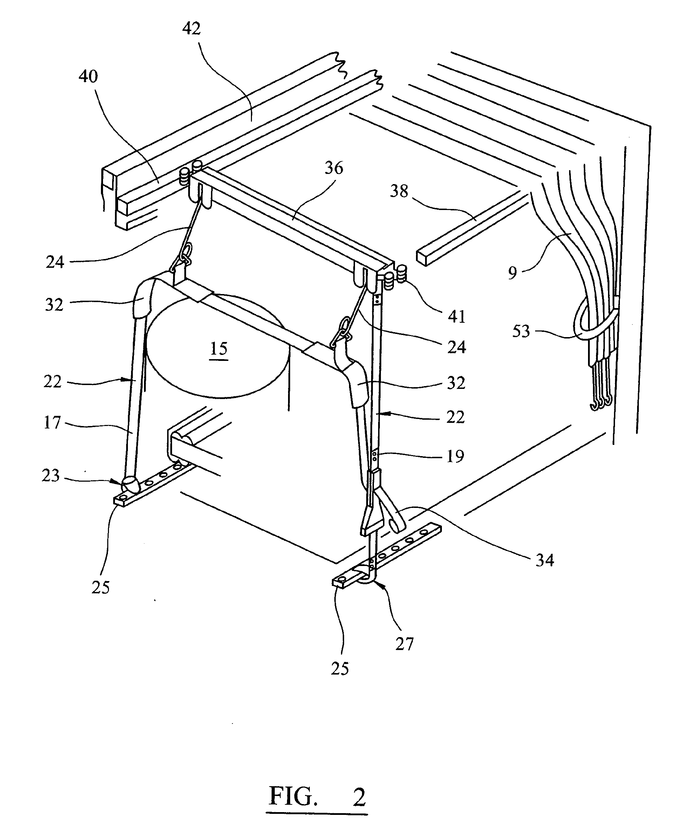

The fastening arrangement 20 is configured to clamp the load 15 against the base. The fastening arrangement comprises a securing strap 22 for engaging and urging against the load 15 to clamp it to the base 2. As shown in Figure 2, a plurality of mounting points 25 are provided along opposing side edges of the base 2. The strap 22 comprises a hook 23 at a first end 17 which connects to one of the plurality of mounting points 25 on the base 2. A ratchet tensioner 26 is connected to a second opposing end 19 of the strap 22 for tightening the strap 22 for clamping against the load 15. The ratchet tensioner 26 connects via a hook 27 to a mounting point 25 corresponding to the mounting point 25 to which the first strap end 17 is connected. The ratchet tensioner 26 is supported in an upright position by a separate support strap 33.

The securing strap 22 is supported in an elevated position from the base 2 by strap supports 24. The strap supports comprise elasticated "bungee" cords. The strap supports 24 are mounted to the roof structure of the trailer 10. The strap 22 is slidingly received within support sleeves 32, which include hooks 35. The hooks 35 connect to the strap supports 24 such that the strap 22 is supported by and slidable relative to the strap supports 24.

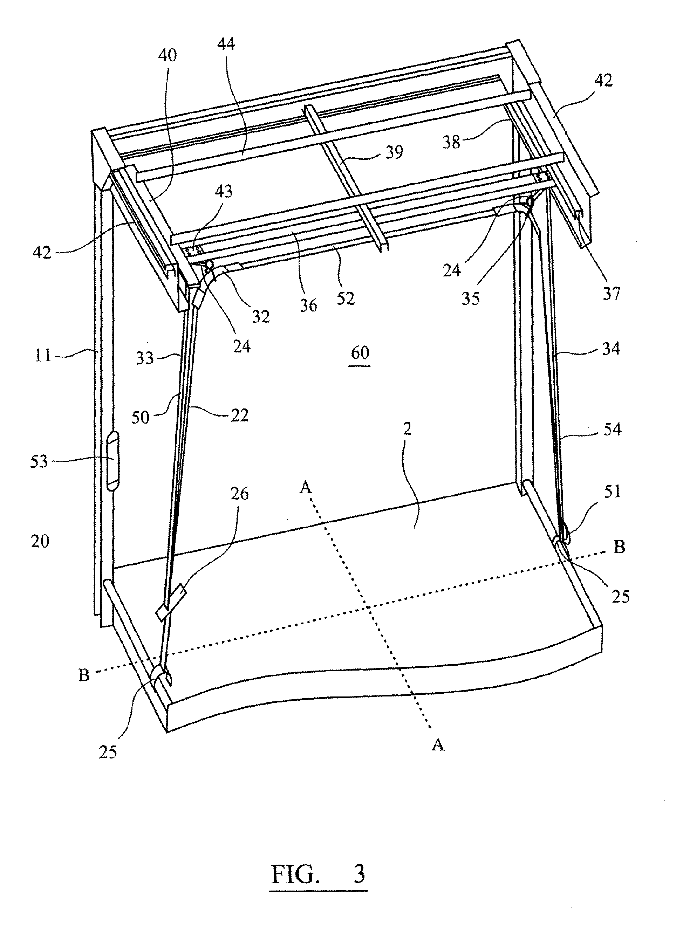

The strap supports 24 and ratchet tensioner support strap 33 are mounted to and supported by cross beam 36. The cross beam 36 is connected to the longitudinal roof frame members 42 by guide tracks 38 and 40. The cross beam 36 is also connected to the roof cross braces 44 by a central guide track 39. The guide tracks 38 and 40 comprise c-section tracks, in which the cross beam 36 is slidingly received. Alternatively, and as shown in Figure 3, one of the guide tracks 40 may comprise an angle section flange, about which cross bar is slidingly mounted. The cross beam 36 includes rollers 41 at it ends 37 for sliding engagement with the cross beam 36. The cross beam 36 also comprises a guide projection (not shown) which is slidingly received within the c-section track 39. The sliding engagement of the cross beam 36 with the tracks 38, 39 and 40 enables the cross beam to slide along the length of the trailer 10 along the longitudinal axis A to move the strap supports 24 and hence the strap 22 along the length of base 2. A pull strap 34 is connected to the cross beam 36 to enable it to be pulled along the length of the base 2 by an operative standing at ground level by pulling the handle 51. When not in use the pull strap 34 may be secured to the strap 22.

The strap supports 24 are connected to the cross beam 36 at proximate the end section 37 of the cross beam 36. The strap supports 24 hold the guide sleeves 32 of the strap 22 in a spaced apart relationship substantially equal to the width of the base 2, as shown in Figure 3. The positioning of the strap supports 24 and guide sleeves 32 along the length of the strap 22 segregates the strap 22 into three sections; a centre section 52, and opposing end sections 50 and 54. The end section 54 includes is connected to the hook 23, and the opposing end section is connected to the ratchet tensioner 26.

Figure 2 shows the strap 22 held in a retracted support position by the strap supports 24. In the retracted support position the strap supports 24 are unextended. The central section 52 of the strap 22 is held spaced from the base close to the roof 7 of the trailer 10. The end sections 50 and 54 are held towards the sides of the base 2 by their connection to the mounting points 25. In this position, a load receiving area 60 is defined between the strap 22 and the base 2. With the strap 22 held in the retracted position, the load 15 may be received within the load receiving area 60 without contacting the strap 22.

Tensioning of the strap by the ratchet tensioner 26 causes the effective length of the strap 22 to shorten. As the free end of the end section 50 of the strap 22 is pulled through the ratchet tensioner 26, the strap 22 is drawn downwards towards the base 2. This downwards force, counteracted by the base 2, causes the strap supports 24 to begin to stretch enabling the guide sleeves 32 and hence the strap 22 to move downwards towards the base.

In the arrangement shown in Figure 3, the strap 22 is moved from the retracted position to a deployed position. The trap supports 24 are stretched from their unextended position in which they held the strap 22 in the stowed support position, to an extended position in which the strap 22 is held in a deployed position. In the deployed position, the load receiving area is reduced.

Goods are loaded on to the base 2 through the side wall 8 of the trailer 10 with the curtain 9 in a retracted position, in which the cross bar 36 is retained at the end of the trailer 10 in a stored position. A strap retainer 53 is used to hold the strap 22 against the upright members of the frame 11 and hence to hold the fastening arrangement in the stored position. When the load 15 has been placed on to the base 2, the strap retainer 53 is removed to release the strap 22. Pull straps 34 are used to slide the cross bar 36, and hence the strap 22, along the length of the trailer to draw the strap 22 over the load 15.

Once the strap 22 is drawn over and level with the load 15, the end sections 54 and 50 are connected to the nearest mounting points 25. The ratchet tensioner 26 is used to tighten the strap 22. As the strap 22 is tightened it is drawn down over the load 15, causing the strap supports 24 to stretch and move to the deployed position. The sleeves 32 allow the strap 22 to slide relative to the strap supports 24 as it is tightened by the ratchet tensioner 26, to enable the strap supports 24 to maintain an even spacing and prevent them from being pulled out of position by the strap 22. Once the strap 22 engages the top of the load 15, tightening of the strap 22 continues to clamp the strap against the load 15. Tensioning continues until the ratchet tensioner 26 can no longer be manually operated. The load 15 is thereby clamped against the base 2 by the strap 22 and secured for transit.

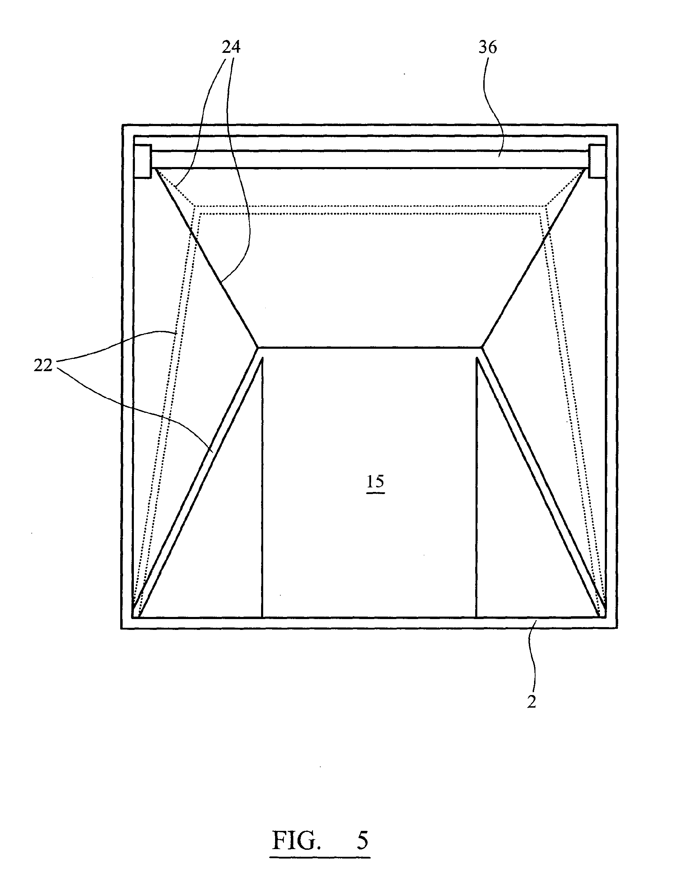

As can be seen from Figure 5, in the retracted position (indicated by phantom lines) the strap 22 is held spaced from the load 15. In the deployed securing position, the strap 22 is held in engagement with and conforms with the shape of the load 15, to clamp the load 15 to the base.

To release the load 15 for unloading, the ratchet tensioner 26 is released to remove the tension in the strap 22. The stretched resilient strap supports 24 biases the strap 22 to the stowed support position. As such, as the ratchet tensioner 26 is released, the strap 22 is pulled upwards by strap supports 24 towards the sowed support position away from the load 15. Once the strap 22 has returned to the retracted stowed position, the pull strap 34 is used to slide the cross bar 36 back to the stored position. The load 15 may then be unloaded from the base 2.

It will be appreciated that in further embodiments various modifications to the specific arrangements described above and shown in the drawings may be made. For example, while a the strap is described as supported from the roof and clamping the load to the base, the strap could be used to clamp the load against a side wall acting as a support surface, with the strap being held spaced from the side wall in the stowed position. In addition, while the securing member is described as being a strap, any suitable securing member capable of being clamped over a load may be used. Furthermore, the strap support I described as being a resilient cord, but may alternatively be a retractable support such as a winch arrangement windable between the stowed and deployed positions.

## Claims

1. A fastening arrangement (20) for securing a load (15) to a load support surface (2) for example of a vehicle (10), the arrangement comprising:
a securing member (22) for clamping said load (15) to the support surface (); and
at least one securing member support (24) mountable spaced from said support surface (2) for supporting the securing member (22);
wherein said at least one securing member support (24) comprises a movable portion (32,35) connected to the securing member (22) movable between a first support position in which at least a portion of the securing member (22) is held spaced from the support surface (2), and a second deployed position in which the securing member (22) is able to engage and secure said load (15) to said support surface (2).

2. The fastening arrangement (20) of claim 1 further comprising a biasing member which biases the movable portion (32,35) and the securing member (22) toward the first support position.

3. The fastening arrangement (20) of claim 1 or 2 wherein the securing member support (24) comprises an elongate resilient member.

4. The fastening arrangement (20) of any preceding claim comprising two securing member supports (24), and wherein the two securing member supports (24) are laterally spaced to support the securing member (22) in the first support position at two laterally spaced apart locations.

5. The fastening arrangement (20) of any preceding claim wherein the securing member (22) has two opposing ends (50,54) which are connectable to corresponding fixed and laterally spaced anchoring points (25) proximate the load support surface (2) such that a load receiving area is defined between the load supporting surface (2) and the securing member (22).

6. The fastening arrangement (20) of claim 5 wherein there is a plurality of anchoring points (25) spaced longitudinally along opposing edges of the support surface (2).

7. The fastening arrangement (20) of any preceding claim wherein the securing member (22) comprises a strap.

8. The fastening arrangement (20) of any preceding claim further comprising tensioning means (26) for tightening the securing member (22) to tension the securing member (22) against the load support surface (2) to clamp the load (15) against the load support surface (2).

9. The fastening arrangement (20) of any preceding claim wherein the securing member (22) is slidingly supported by the at least one securing member support (24).

10. The fastening arrangement (20) of claim 9 wherein the at least one securing member support (24) comprises a sleeve (32) for slidingly receiving the securing member (22).

11. The fastening arrangement (20) of any preceding claim further comprising guide means (38,40) mountable in a spaced relationship to the support surface (2); and wherein the at least one securing member support (24) is movably mounted on the guide means (38,40) to enable selective positioning of the support member (22) along the guide means (38,40).

12. A load transporter (10), for example a vehicle trailer, comprising:
a base (2) defining a load support surface (2) for supporting a load (15); and
at least one fastening arrangement (20) according to any preceding claim;
wherein the at least one securing member support (24) is mounted in an elevated position relative to the base (2).

13. The load transporter (10) of claim 12 wherein the at least one securing member support (24) is moveably mounted in said elevated position to enable the securing member (22) to be selectively moved to a plurality of securing positions.

14. The load transporter (10) of any one of claims 12 or 13 further comprising a cross beam (36) mounted in an elevated position from and extending across the base (2), and upon which the securing member support (24) is mounted.

15. The load transporter (10) of claim 14 wherein said cross beam (36) is slideably mounted to a guide member (38,40) such that it is movable along the length of the base (2).
